# EUROPEAN PATENT SPECIFICATION

(11) **EP 2 878 479 B1**
(45) Date of publication and mention of the grant of the patent: **08.02.2017**
(21) Application number: 14192402.7
(22) Date of filing: 10.11.2014
(51) Int. Cl.: B60K 37/06

(54) **Information display unit for saddle type vehicle and saddle type vehicle mounted on the steering handle**
Lenker montierte Informationsanzeigeeinheit für Sattelfahrzeug und Sattelfahrzeug
Unité d'affichage d'informations pour véhicule à selle et véhicule à selle monté sur le guidon

(30) Priority: 18.11.2013 JP 2013237589
(43) Date of publication of application: 03.06.2015
(73) Proprietor: Yamaha Hatsudoki Kabushiki Kaisha, Iwata-shi, Shizuoka 438-8501 (JP)
(72) Inventor: Yagi, Toshiki, Iwata-shi, Shizuoka 438-8501 (JP); Watanabe, Takashi, Iwata-shi, Shizuoka 438-8501 (JP); Tachibana, Masumi, Iwata-shi, Shizuoka 438-8501 (JP)
(74) Representative: Grünecker Patent- und Rechtsanwälte PartG mbB

(56) References cited:
- EP-A1- 2 071 390
- JP-A- 2010 230 364
- US-A1- 2003 043 108
- US-A1- 2011 149 194
- US-A1- 2011 149 196
- US-A1- 2012 106 081
- US-A1- 2014 125 914

## Description

### BACKGROUND OF THE INVENTION

The present invention relates to an information display unit for a saddle type vehicle and a saddle type vehicle on which the information display unit is mounted.

In saddle type vehicles such as motorcycles, snowmobiles, and personal water crafts, an information display unit configured to display information such as the running speed is mounted around the handle bar unit. This information display unit is exposed to the weather.

The information display unit includes instrumentation including a heat generating member such as a light source, a waterproof protection cover covering the surface of the instrumentation, and a case housing the instrumentation with the waterproof protection cover. When the information display unit is used, the temperature of the air inside the information display unit increases on account of heat generated from the heat generating member, solar heat, or the like. When the information display unit in this state is exposed to the weather, the air contacting with the inner surface of the waterproof protection cover is cooled, with the result that condensation occurs on the inner surface of the waterproof protection cover. This causes the waterproof protection cover to be fogged.

To restrain such fogging of the waterproof protection cover, plural types of means have been proposed. For example, Patent Literature 1 (Japanese Unexamined Patent Publication No. 06-032270) discloses a technology of restraining the temperature increase in a case by increasing the inner capacity of the case. Furthermore, Patent Literature 1 and Patent Literature 2 (Japanese Unexamined Patent Publication No. 2012-045983) disclose technologies of restraining the temperature increase in a case by forming a vent through the case to connect the inside to the outside and allowing the hot air in the case to escape to the outside. Furthermore, Patent Literatures 3 and 4 (Japanese Unexamined Patent Publication No. 2010-230364 and Japanese Unexamined Patent Publication No. 2006-184154) disclose technologies of forming an antifogging film on the inner surface of a waterproof protection cover according the preamble of claim 1.

### SUMMARY OF THE INVENTION

The antifogging film recited in Patent Literatures 3 and 4 is thin and has low hardness. For this reason, when the antifogging film is formed on the inner surface of the waterproof protection cover as in Patent Literatures 3 and 4, a space is provided between the antifogging film and the instrumentation in order to prevent the antifogging film from being damaged due to the contact of the antifogging film with the instrumentation on account of the vibrations during the running. This arrangement achieves both the shock resistance and fogging prevention.

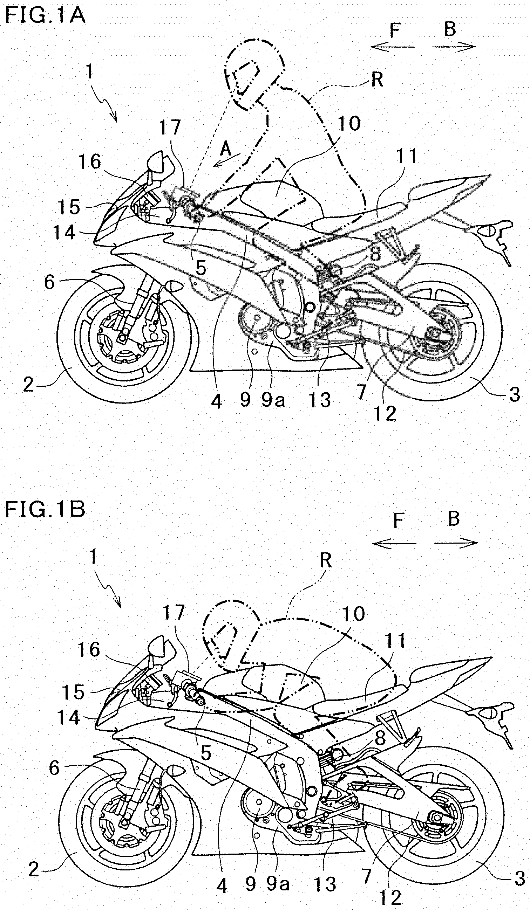

Meanwhile, on the saddle type vehicle, the rider changes his/her riding posture in accordance with the running state (see FIG. 1A and FIG. 1B). When the riding posture is changed, the angle at which the rider views the information display unit is changed. In the known arrangement in which the antifogging film is formed on the inner surface of the waterproof protection cover and a space (air layer) is formed between the antifogging film and the instrumentation, the instrumentation is distanced from the outer surface of the waterproof protection cover by the thickness of the waterproof protection cover, the thickness of the antifogging film, and the thickness of the air layer. This results in the formation of a blind area on the instrumentation when the instrumentation is viewed by the rider at a certain angle.

In consideration of the above, an object of the present invention is to provide an information display unit for a saddle type vehicle, which excels in shock resistance, prevents the fogging of a waterproof protection cover, and on which a blind area is small even if the viewing angle of the rider changes, and to provide a saddle type vehicle on which the information display unit is mounted. Such an object is achieved by an information display unit according to claim 1

An information display unit for a saddle type vehicle of the present teaching is configured to display information and includes: a display device which includes a display surface on which the information is displayed; a waterproof protection cover which is light transmissive and impervious to water; a case which forms, with the waterproof protection cover, a housing space in which the display device is housed; and an airtight antifogging layer which contacts with an inner surface of the waterproof protection cover and the display surface of the display device so as to secure the airtightness between the inner surface and the display surface and prevent fogging, is thinner than the waterproof protection cover, and is light transmissive.

According to this arrangement, the information display unit for the saddle type vehicle (hereinafter, this may be simply referred to as the information display unit) includes the airtight antifogging layer which contacts with the inner surface of the waterproof protection cover and the display surface of the display device so as to secure the airtightness between the inner surface of the waterproof protection cover and the display surface of the display device. Because of this arrangement, warm air which causes condensation does not exist between the inner surface of the waterproof protection cover and the display surface of the display device. As a result, even if the waterproof protection cover is exposed to the weather, the occurrence of condensation at the inner surface of the waterproof protection cover is prevented, and hence the fogging of the waterproof protection cover is prevented.

Furthermore, the airtight antifogging layer is always in contact with the inner surface of the waterproof protection cover and the display surface of the display device. For this reason, even if the vehicle vibrates during the running, the airtight antifogging layer is not damaged and the antifogging capability is not lowered as in the case of the known antifogging film. The information display unit therefore has high shock resistance.

In addition to the above, by the waterproof protection cover, the display device is protected from, for example, weather, high-pressure water from a high-pressure washer, and the collision with an obstacle. Because the strength of the airtight antifogging layer is not required to be high, it is possible to arrange the airtight antifogging layer to be thinner than the waterproof protection cover. Because the airtight antifogging layer is thin, the distance between the outer surface of the waterproof protection cover and the display surface of the display device is shortened. With this, the blind area on the display surface the display device for the rider is small irrespective of the angle at which the rider views the information display unit.

In addition to the above, because the information display unit of the present invention is provided with the airtight antifogging layer, the occurrence of fogging is prevented irrespective of the temperature of the air in the information display unit. It is therefore unnecessary to provide an internal space of the information display unit for the purpose of restraining the internal temperature to be a temperature with which the fogging is prevented. The capacity of the internal space of the information display unit is determined in consideration of the heat resistance of the internal components of the information display unit. The heat resistance of the internal components is higher than the internal temperature at which the fogging (condensation) occurs. It is therefore possible to reduce the capacity of the internal space of the information display unit as compared to the case where the air exists between the waterproof protection cover and the display surface of the display device. Because the capacity of the information display unit is reduced, the degree of freedom in the mounting position of the information display unit with respect to the saddle type vehicle is improved.

In the known information display unit in which the condensation water is generated between the waterproof protection cover and the display surface of the display device, the mounting angle of the information display unit with respect to the saddle type vehicle is preferably set at an angle at which the condensation water does not easily flow. Meanwhile, because the information display unit of the present invention includes the airtight antifogging layer, the condensation water is not generated between the waterproof protection cover and the display surface of the display device. This improves the degree of freedom in the mounting angle of the information display unit with respect to the saddle type vehicle.

The information display unit of the present invention is preferably arranged so that, an air layer which is thicker than the airtight antifogging layer is formed between the display device and the case, and the waterproof protection cover, the airtight antifogging layer, the display device, at least part of the air layer, and a bottom part of the case are disposed in a layered manner.

According to this arrangement, the air layer which is thicker than the airtight antifogging layer is formed between the display device and the case. Furthermore, the waterproof protection cover, the airtight antifogging layer, the display device, at least part of the air layer, and the bottom part of the case are disposed in a layered manner. This makes it possible to provide, in the information display unit, an internal space which has a large contact area with the display device and is large in capacity. The heat generated by the display device is therefore efficiently radiated to the air layer.

Furthermore, because no air layer is provided between the display surface of the display device and the inner surface of the waterproof protection cover, the distance between the display surface of the display device and the outer surface of the waterproof protection cover does not become long even if the capacity of the internal space of the information display unit is increased. On this account, the capacity of the internal space of the information display unit is increased without increasing the size of the blind area on the display surface of the display device.

Furthermore, because of the high heat radiation, the degree of freedom in the radiation structure of the information display unit is improved and hence the capacity of the information display unit can be reduced. The degree of freedom in the mounting position of the information display unit on the saddle type vehicle is therefore improved.

The information display unit of the present invention is preferably arranged such that the case includes a communication path which is thicker than the airtight antifogging layer and connects, to the outside, the at least part of the air layer which is disposed between the display device and the bottom part of the case in the layered manner.

According to this arrangement, the case includes the communication path which is thicker than the airtight antifogging layer and connects, to the outside, the at least part of the air layer disposed between the display device and the bottom part of the case in the layered manner. This makes it possible to efficiently dissipate, through the communication path, the heat of the warm air from the air layer from which the heat generated from the display device is efficiently radiated. The heat radiation of the information display unit is therefore improved. On this account, the degree of freedom in the heat radiation structure of the information display unit is increased and the capacity of the information display unit can be reduced. The degree of freedom in the mounting position of the information display unit on the saddle type vehicle is therefore improved.

The information display unit of the present teaching is preferably arranged so that the case includes plural communication paths which are thicker than the airtight antifogging layer and connect, to the outside, the at least part of the air layer which is disposed between the display device and the bottom part of the case in the layered manner.

According to this arrangement, the case includes communication paths which are thicker than the airtight antifogging layer and connect, to the outside, the at least part of the air layer disposed between the display device and the bottom part of the case. This arrangement facilitates the air circulation between the at least part of the air layer from which the heat generated from the display device is efficiently radiated and the outside. As a result, it is possible to further evenly radiate the heat inside the information display unit.

A saddle type vehicle of the present invention includes: a vehicle body frame; a power source mounted on the vehicle body frame; a seat provided upward of the power source; a handle unit which is provided forward of the seat and upward of the power source; and the information display unit according to any one of first to fourth aspects, which is provided forward of the seat and upward of the power source and includes a screen having a front end part and a rear end part which is downward of the front end part.

The saddle type vehicle of the present teaching is preferably arranged so that the information display unit is provided forward of the handle unit in a vehicle forward/rearward direction.

According to this arrangement, the information display unit is provided forward of the handle unit in the vehicle forward/rearward direction. For this reason, the line of sight of the rider tends to be inclined with respect to the screen of the information display unit as compared to cases where the information display unit is provided on the handle unit or rearward of the handle unit. In this regard, because in the present teaching the degree of freedom in the mounting angle of the information display unit with respect to the saddle type vehicle is high, it is possible to provide the screen of the information display unit at an angle orthogonal to or nearly orthogonal to the line of sight of the rider. This improves the visibility of the screen of the information display unit for the rider, and the blind area is reduced.

The saddle type vehicle of the present teaching is preferably arranged such that the distance between the front end part and the rear end part in a vehicle up/down direction of the screen of the information display unit is equal to or longer than the distance between the front end part and the rear end part in the vehicle forward/rearward direction of the screen.

According to this arrangement, the distance between the front end part and the rear end part in the vehicle up/down direction of the screen is equal to or longer than the distance between the front end part and the rear end part in the vehicle forward/rearward direction of the screen. This allows the screen of the information display unit provided forward of the handle unit to be at an angle orthogonal to or nearly orthogonal to the line of light of the rider.

The saddle type vehicle of the present teaching is preferably arranged such that the information display unit is provided on the handle unit or is provided rearward of the handle unit in the vehicle forward/rearward direction.

According to this arrangement, the information display unit is provided on the handle unit or provided rearward of the handle unit in the vehicle forward/rearward direction. This makes it possible to shorten the length of the saddle type vehicle in the vehicle forward/rearward direction as compared to a case where the information display unit is provided forward of the handle unit. Furthermore, it is possible to provide the information display unit at a position close to the center of gravity of the vehicle.

The saddle type vehicle of the present teaching is preferably arranged such that the distance between the front end part and the rear end part in a vehicle up/down direction of the screen of the information display unit is equal to or shorter than the distance between the front end part and the rear end part in the vehicle forward/rearward direction of the screen.

According to this arrangement, the distance between the front end part and the rear end part in the vehicle up/down direction of the screen is equal to or shorter than the distance between the front end part and the rear end part in the vehicle forward/rearward direction of the screen. For this reason, it is possible to provide the screen of the information display unit disposed rearward of the handle unit, at an angle orthogonal to or nearly orthogonal to the line of sight of the rider.

### BRIEF DESCRIPTION OF THE DRAWINGS

FIG. 1A is a side view of a motorcycle of the first embodiment of the present invention, whereas
FIG. 1B shows a state in which the riding posture is different from that in FIG. 1A.
FIG. 2 is a drawing viewed in the direction indicated by the arrow A in FIG. 1A.
FIG. 3 is a sectional view taken at the B-B line in FIG. 2.
FIG. 4 is an exploded perspective view of the information display unit shown in FIG. 2.
FIG. 5A is a side view of a motorcycle of the second embodiment of the present teaching, whereas FIG. 5B shows a state in which the riding posture is different from that in FIG. 5A.
FIG. 6 is a drawing viewed in the direction indicated by the arrow A in FIG. 5A.
FIG. 7 is a sectional view of the information display unit shown in FIG. 6.
FIG. 8A is a side view of a motorcycle of another embodiment of the present teaching, whereas
FIG. 8B shows a state in which the riding posture is different from that in FIG. 8A.

### DESCRIPTION OF THE PREFERRED EMBODIMENTS

### <First Embodiment>

The following will describe the first embodiment of the present teaching with reference to figures.

The present embodiment is an example in which an information display unit of a saddle type vehicle of the present teaching is mounted on a motorcycle 1. In the descriptions below, forward/rearward directions indicate vehicle frontward and rearward directions from the viewpoint of the rider R sitting on a later-described seat 11 of the motorcycle 1, whereas left-right directions indicate vehicle leftward and rightward directions (vehicle width directions) from the viewpoint of the rider R sitting on the seat 11.

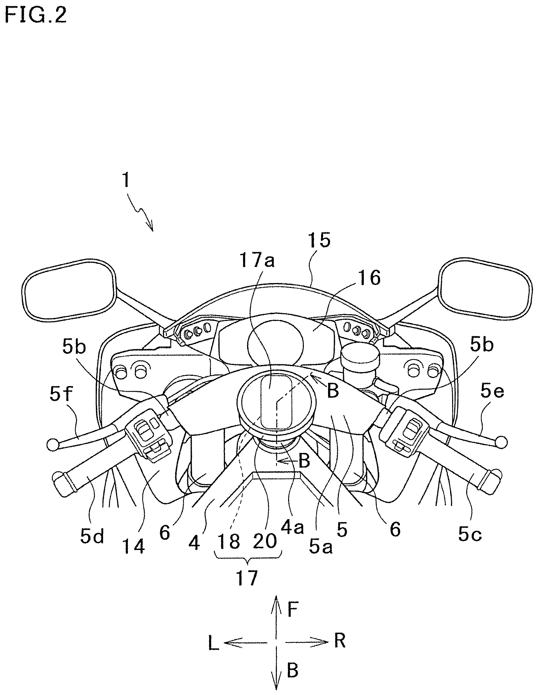

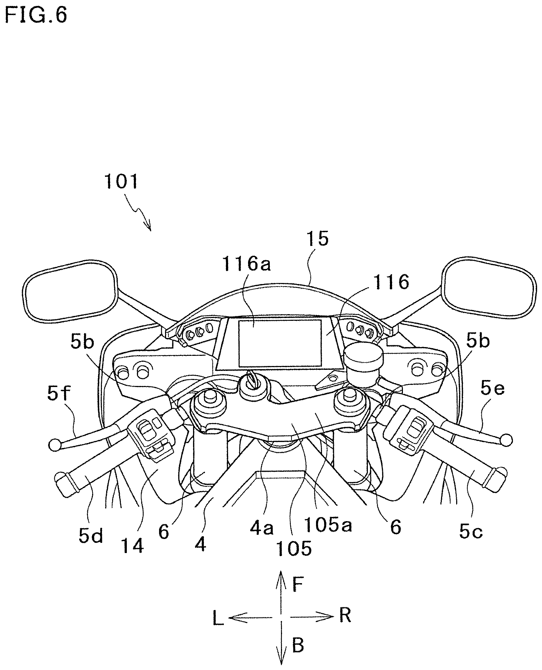

As shown in FIG. 1A and FIG. 1B, the motorcycle 1 of the present embodiment includes a front wheel 2, a rear wheel 3, and a vehicle body frame 4. The directions indicated by arrows F and B in FIG. 1 and later-described FIGs. 2, 5, and 6 indicate frontward and rearward directions, respectively. Furthermore, the directions indicated by arrows L and R in later-described FIGs. 2 and 6 indicate leftward and rightward directions, respectively.

As shown in FIG. 2, at a front portion of the vehicle body frame 4, a head pipe 4a is provided. Into the head pipe 4a, a steering shaft (not illustrated) is rotatably inserted. To the upper end of this steering shaft, a handle crown 5a is fixed. At an upper part of the handle crown 5a, a disc-shaped information display unit (information display unit for saddle type vehicle) 17 is provided. The information display unit 17 is positioned to be higher than an engine 9. The information display unit 17 is provided at a central part of the handle crown 5a in the left-right direction (i.e., at a central part of the motorcycle 1 in the vehicle width direction). The details of the information display unit 17 will be described later.

To the left and right end portions of the handle crown 5a, upper end portions of front forks 6 are fixed, respectively. Lower end portions of the front forks 6 support the front wheel 2. Each front fork 6 includes a suspension (not illustrated) which is configured to absorb shocks in the up/down direction.

To the upper end portions of the two front forks, furthermore, handlebars 5b are fixed, respectively. The left handlebar 5b extends leftward and rearward from the left end portion of the handle crown 5a. The right handlebar 5b extends rightward and rearward from the right end portion of the handle crown 5a.

To the outer circumferences of the two handlebars 5b, grips 5c and 5d are attached, respectively. The right grip 5c is a throttle grip. To the right handlebar 5b is attached a brake lever 5e, whereas to the left handlebar 5b is attached a clutch lever 5f. On the handle crown 5a and the handlebars 5b, plural types of switches are provided. In FIG. 2, the switches or the like provided on the handle crown 5a are not shown. The handlebars 5b and the grips 5c and 5d constitute a handle bar unit. The handle crown 5a, the handlebars 5b, the grips 5c and 5d, levers 5e and 5f, and switches of plural types constitute a handle unit 5.

A rear portion of the vehicle body frame 4 swingably supports a front end part of a swingarm 7. A rear end part of the swingarm 7 supports the rear wheel 3. A part of the swingarm 7 which part is different from the swing center is connected to the vehicle body frame 4 via a rear suspension 8 which is configured to absorb shocks in the up/down direction.

Furthermore, on the vehicle body frame 4, the engine 9 (power source) is mounted. This engine 9 may be directly mounted on the vehicle body frame 4 or may be indirectly mounted through the intermediary of another member. The engine 9 is positioned to be lower than the handle unit 5. The engine 9 may be water-cooled or air-cooled.

Behind the engine 9 is provided a transmission (not illustrated) including multi-stage shift gears. The driving force of the engine 9 is transferred to the rear wheel 3 through the transmission and a chain 12. To the left of the transmission, a shift pedal 13 is provided to change the gears of the transmission.

On the rearward of the handle unit 5, a fuel tank 10 and the seat 11 are attached to an upper part of the vehicle body frame 4. The seat 11 is provided rearward of the fuel tank 10. The fuel tank 10 and the seat 11 are positioned to be higher than the engine 9.

On the upward of the front wheel 2 and forward of the handle unit 5 (i.e., forward of the seat 11), a headlight unit 14 is provided. The front surface of the headlight unit 14 is covered with a front cowling 15. On an upper part of the headlight unit 14, a meter unit 16 including a tachometer and a speed meter.

Furthermore, the motorcycle 1 is provided with an unillustrated controller which is configured to control operations of sections of the motorcycle 1. The controller is constituted by members such as a CPU, a ROM, and a RAM. Furthermore, the motorcycle 1 includes an unillustrated radio communication device connected to the controller. Furthermore, the motorcycle 1 includes a battery (not illustrated) which is configured to supply power to electronic devices such as the controller and the meter unit 16.

The details of the information display unit 17 will be given below.

The information display unit 17 includes a screen 17a on which information such as map information and information regarding the vehicle state is displayed. The screen 17a is substantially rectangular and long in the forward/rearward direction. The screen 17a of the information display unit 17 is inclined in the forward/rearward direction and the up/down direction to face rearward and upward. To put it differently, the rear end part of the screen 17a is positioned downward of the front end part of the screen 17a. In the present embodiment, the distance between the front end part and the rear end part of the screen 17a in the up/down direction is equal to or shorter than the distance between the front end part and the rear end part of the screen 17a in the forward/rearward direction. The inclination angle of the screen 17a is preferably orthogonal to or nearly orthogonal to the line of sight of the rider sitting on the seat 11. Alternatively, the distance between the front end part and the rear end part of the screen 17a in the up/down direction may be longer than the distance between the front end part and the rear end part of the screen 17a in the forward/rearward direction.

The information display unit 17 is constituted by a multifunction mobile terminal 18 and an installation unit 20 which detachably houses the multifunction mobile terminal 18 therein. The multifunction mobile terminal 18 constituting the information display unit 17 is replaceable.

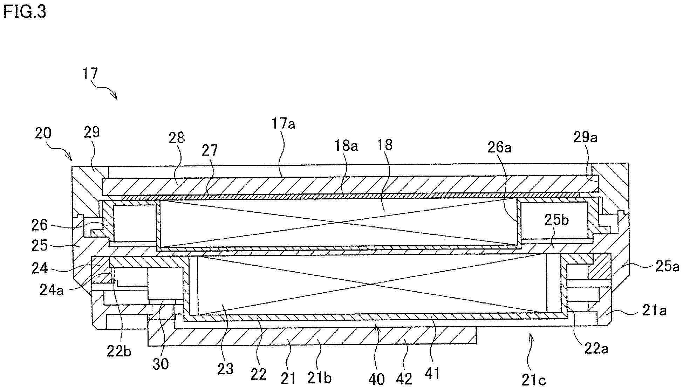

The multifunction mobile terminal 18 is a mobile terminal called a smart phone, and is a rectangular plate in shape. The multifunction mobile terminal 18 includes, for example, a display such as a liquid crystal display, an organic EL display, and a plasma display. The display may be a segment display or a dot matrix display. When the display is a liquid crystal display, the display may be a full transmissive type using solely a backlight as a light source or a semi transmissive type (semi reflective type) using reflection of sunlight and a backlight as light sources. As shown in FIG. 3, the almost entirety of the surface of the multifunction mobile terminal 18 constitutes a display surface 18a for displaying information. The display surface 18a is made of, for example, glass, synthetic resin, or the like. The screen 17a of the information display unit 17 is substantially as large as the display surface 18a of the multifunction mobile terminal 18.

In addition to the above, the multifunction mobile terminal 18 includes a wireless communication means and is hence able to receive information from the outside and receive information regarding the vehicle state from the radio communication device (not illustrated) of the motorcycle 1. Furthermore, the multifunction mobile terminal 18 is arranged to be charged in a contactless manner.

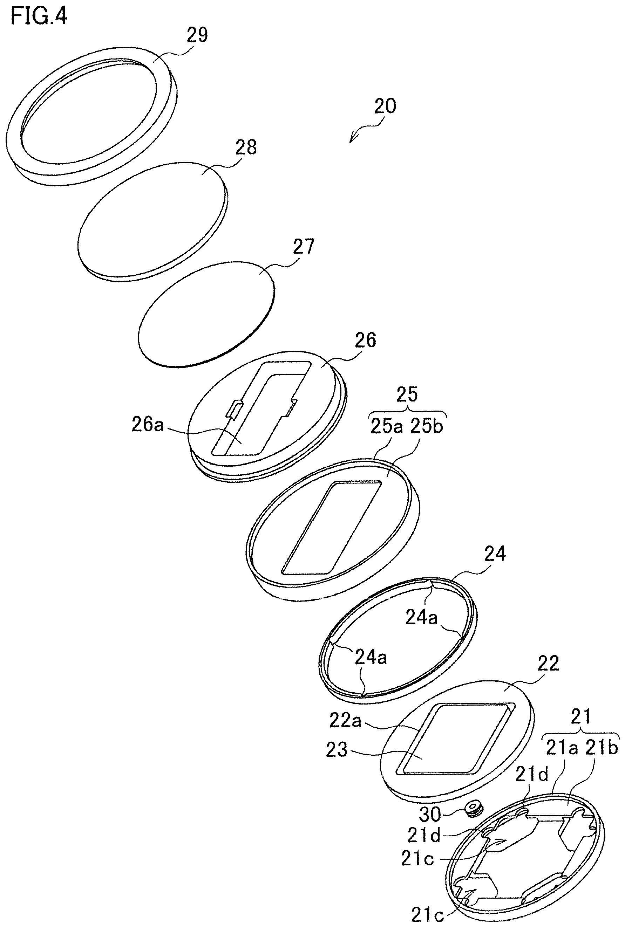

As shown in FIG. 3 and FIG. 4, the installation unit 20 includes a base 21, a feeder installation member 22, a feeder 23, a positioning ring 24, an intermediate member 25, a mobile terminal installation member 26, an airtight antifogging layer 27, a waterproof protection cover 28, and a bezel 29. As described above, the installation unit 20 is disposed to be inclined with respect to the up/down direction. The following description of the information display unit 17 assumes that the thickness direction of the installation unit 20 is in parallel to the up/down direction, the waterproof protection cover 28 side (i.e., the side viewed by the rider R) is the upper side, and the base 21 side is the lower side.

The base 21 is made up of a cylindrical circumferential wall portion 21a and a circular plate portion 21 b which is connected to a substantially central part in the up/down direction of the inner circumferential surface of the circumferential wall portion 21 a. The circular plate portion 21 b is provided with four communication paths 21 c each of which is a substantially triangular hole. At the edge portion of each communication path 21c, two arc-shaped notches 21 d are formed. To each of the eight notches 21d, a cylindrical rubber bush 30 is fitted. The base 21 is made of synthetic resin. It is noted that the feeder installation member 22, the positioning ring 24, the intermediate member 25, and the bezel 29 are also made of synthetic resin similar to the resin of which the base 21 is made.

The feeder installation member 22 is a substantially disc-shaped member and provided upward of the base 21. The lower surface of the feeder installation member 22 contacts with the upper surfaces of the eight rubber bushes 30 attached to the base 21. The feeder installation member 22 and the base 21 are fixed by a screw (not illustrated) inserted into each rubber bush 30 from below. A gap is formed between the feeder installation member 22 and the base 21.

At a central part of the feeder installation member 22, a housing portion 22a which is concave downward is formed. In this housing portion 22a, a feeder 23 is provided to supply power to the multifunction mobile terminal 18 in a contactless manner. The feeder 23 is replaceable. At a bottom portion of the housing portion 22a, an insertion hole (not illustrated) is formed to insert a wire (not illustrated) extending from the feeder 23 therein. The wire extending from the feeder 23 passes through this insertion hole and the communication path 21c of the base 21, and reaches the outside of the installation unit 20. A part of the wire reaching the outside of the installation unit 20 is connected to a battery (not illustrated). The communication paths 21 c of the base 21 are formed to oppose the lower surface of the housing portion 22a of the feeder installation member 22.

The intermediate member 25 is provided upward of the feeder installation member 22. The intermediate member 25 is constituted by a cylindrical circumferential wall portion 25a and a circular plate portion 25b connected to a substantially central part in the up/down direction of the inner circumferential surface of the circumferential wall portion 25a. The circular plate portion 25b is provided on the upper surface of the feeder installation member 22. The inner diameter of the circumferential wall portion 25a is substantially identical with the outer diameter of the circumferential wall portion 21 a of the base 21. The lower end portion of the inner circumferential surface of the circumferential wall portion 25a covers an upper end part of the outer circumferential surface of the circumferential wall portion 21 a of the base 21.

The positioning ring 24 is provided on the outer circumference side of the feeder installation member 22 and is fixed to the lower surface of the intermediate member 25 by an unillustrated screw. The inner circumferential surface of the positioning ring 24 has a step. At this step, the outer circumferential end of the feeder installation member 22 is provided. Furthermore, at a lower part of the inner circumferential surface of the positioning ring 24 (i.e., downward of the step), four fitting grooves 24a are formed at intervals of 90 degrees. To the four fitting grooves 24a, four protrusions 22b provided on the outer circumferential part of the feeder installation member 22 are fitted.

On the upward of the base 21, a space (air layer 40) enclosed by the upper surface of the base 21, the lower surface of the feeder installation member 22, the positioning ring 24, and the inner surface of the circumferential wall portion 25a of the intermediate member 25 is formed. This air layer 40 is thinnest at a part between the upper surface of the circular plate portion 21 b of the base 21 and the lower surface of the housing portion 22a of the feeder installation member 22. The minimum thickness of the air layer 40 is thicker than the airtight antifogging layer 27.

The mobile terminal installation member 26 is provided on the upper surface of the circular plate portion 25b of the intermediate member 25. The mobile terminal installation member 26 is a substantially disc-shaped member made of a flexible and elastic material (such as silicon rubber). At a central part of the mobile terminal installation member 26, a housing portion 26a which is concave downward is formed. In this housing portion 26a, the multifunction mobile terminal 18 is provided. When the multifunction mobile terminal 18 is provided in the housing portion 26a, the display surface 18a of the multifunction mobile terminal 18 is flush with or slightly higher than the upper end surface of the mobile terminal installation member 26.

The bezel 29 is an annular member and is detachably attached to the upper end of the circumferential wall portion 25a of the intermediate member 25. On the inner circumferential surface of the bezel 29, a fitting groove 29a is formed.

The waterproof protection cover 28 is provided upward of the mobile terminal installation member 26 and the multifunction mobile terminal 18. The outer circumferential end of the waterproof protection cover 28 is fitted to the fitting groove 29a of the bezel 29 and is supported by the bezel 29. The waterproof protection cover 28 is formed to be a flat disc. The waterproof protection cover 28 is made of a material which is light transmissive and impervious to water. The waterproof protection cover 28 is transparent and made of, for example, glass, synthetic resin, or the like.

The airtight antifogging layer 27 is provided between the waterproof protection cover 28 and the combination of the mobile terminal installation member 26 and the multifunction mobile terminal 18. The airtight antifogging layer 27 contacts with the display surface 18a of the multifunction mobile terminal 18 and the lower surface (inner surface) of the waterproof protection cover 28. On this account, the display surface 18a of the multifunction mobile terminal 18 and the lower surface of the waterproof protection cover 28 are airtight therebetween. The upper surface of the airtight antifogging layer 27 is adhered to the waterproof protection cover 28. The lower surface of the airtight antifogging layer 27 closely contacts with the display surface 18a of the multifunction mobile terminal 18 in a peelable manner.

The airtight antifogging layer 27 is formed to be a disc. The outer diameter of the airtight antifogging layer 27 is slightly shorter than the outer diameter of the waterproof protection cover 28. The thickness of the airtight antifogging layer 27 is substantially uniform and slightly shorter than the thickness of the waterproof protection cover 28.

The airtight antifogging layer 27 is made of a light-transmissive material. The airtight antifogging layer 27 is transparent and made of, for example, synthetic resin. The airtight antifogging layer 27 is flexible. The airtight antifogging layer 27 preferably has viscosity. The airtight antifogging layer 27 is made of, for example, a gelatinous material. When the airtight antifogging layer 27 is made of a gelatinous material, the airtight antifogging layer 27 may be adhered to the waterproof protection cover 28 without using an adhesive or the like. Furthermore, when the airtight antifogging layer 27 is made of a gelatinous material, one of the surfaces of the airtight antifogging layer 27 may be surface-treated to facilitate the peeling of the airtight antifogging layer 27 closely contacting with the display surface 18a of the multifunction mobile terminal 18.

On the outer surface (upper surface) of the waterproof protection cover 28, a touch panel (not illustrated) having a touch sensor may be provided. This touch sensor may be arranged to be operable in such a way that the sensor is electrically connected with an electric component in the information display unit 17 and operated by pressing the surface of the touch panel by a finger or slipping a finger on the surface of the touch panel.

The feeder installation member 22, the feeder 23, the circular plate portion 25b of the intermediate member 25, the mobile terminal installation member 26, and the multifunction mobile terminal 18 constitute a display device 41. Furthermore, the base 21, the circumferential wall portion 25a of the intermediate member 25, and the bezel 29 constitute a case 42. The circular plate portion 21 b of the base 21 constitutes a bottom portion of the case 42. In a space (housing space) formed by the case 42 and the waterproof protection cover 28, the display device 41 is housed. Furthermore, the waterproof protection cover 28, the airtight antifogging layer 27, the display device 41, the air layer 40, and the circular plate portion 21b of the base 21 are lined up in the up/down direction (i.e., disposed in a layered manner).

The information display unit 17 of the present embodiment includes an airtight antifogging layer 27 which contacts with the lower surface (inner surface) of the waterproof protection cover 28 and the display surface 18a of the multifunction mobile terminal 18 so as to secure the airtightness between the inner surface of the waterproof protection cover 28 and the display surface 18a of the multifunction mobile terminal 18. For this reason, warm air which causes condensation does not exist between the inner surface of the waterproof protection cover 28 and the display surface 18a of the multifunction mobile terminal 18. As a result, even if the waterproof protection cover 28 is exposed to the weather, the occurrence of condensation at the inner surface of the waterproof protection cover 28 is prevented, and hence the fogging of the waterproof protection cover 28 is prevented.

In addition to the above, the airtight antifogging layer 27 always contacts with the lower surface (inner surface) of the waterproof protection cover 28 and the display surface 18a of the multifunction mobile terminal 18. For this reason, even if the vehicle vibrates during the running, the airtight antifogging layer 27 is not damaged and the antifogging capability is not lowered as in the case of the known antifogging film. The information display unit 17 therefore has high shock resistance.

Furthermore, by the waterproof protection cover 28, the multifunction mobile terminal 18 is protected from, for example, weather, high-pressure water from a high-pressure washer, and the collision with an obstacle. Because the strength of the airtight antifogging layer 27 is not required to be high, it is possible to arrange the airtight antifogging layer 27 to be thinner than the waterproof protection cover 28. Because the airtight antifogging layer 27 is thin, the distance between the outer surface of the waterproof protection cover 28 and the display surface 18a of the multifunction mobile terminal 18 is shortened.

As shown in FIG. 1A and FIG. 1B, when the rider R changes the riding posture, the angle at which the rider R views the information display unit 17 also changes. When the distance between the outer surface of the waterproof protection cover 28 and the display surface 18a of the multifunction mobile terminal 18 is long, a blind area may be formed on the display surface 18a of the multifunction mobile terminal 18 when the information display unit 17 is viewed by the rider at a certain angle. In this regard, in the present embodiment, as described above, because the distance between the outer surface of the waterproof protection cover 28 and the display surface 18a of the multifunction mobile terminal 18 is short, the blind area on the display surface 18a of the multifunction mobile terminal 18 for the rider R is small even if the angle at which the rider R views the information display unit 17 changes.

Furthermore, because the information display unit 17 of the present embodiment is provided with the airtight antifogging layer 27, the occurrence of fogging is prevented irrespective of the temperature of the air in the information display unit 17. It is therefore unnecessary to provide an internal space of the information display unit 17 for the purpose of restraining the internal temperature to be a temperature with which the fogging is prevented. The capacity of the internal space of the information display unit 17 is determined in consideration of the heat resistance of the internal components. The heat resistance of the internal components is higher than the internal temperature at which the fogging (condensation) occurs. It is therefore possible to reduce the capacity of the internal space of the information display unit 17 as compared to the case where the air exists between the waterproof protection cover 28 and the display surface 18a of the multifunction mobile terminal 18. Because the capacity of the information display unit 17 is reduced, the degree of freedom in the mounting position of the information display unit 17 with respect to the motorcycle 1 is improved.

Furthermore, in the known information display unit in which the condensation water is generated between the waterproof protection cover 28 and the display surface 18a of the multifunction mobile terminal 18, the mounting angle of the information display unit 17 with respect to the motorcycle 1 is preferably set at an angle at which the condensation water does not easily flow. In this regard, because the information display unit 17 of the present embodiment is provided with the airtight antifogging layer 27, condensation water is not generated between the waterproof protection cover 28 and the display surface 18a of the multifunction mobile terminal 18. The degree of freedom in the mounting angle of the information display unit 17 with respect to the motorcycle 1 is therefore improved.

In addition to the above, in the present embodiment, the air layer 40 which is thicker than the airtight antifogging layer 27 is formed between the feeder installation member 22 (display device 41) and the base 21 (case 42). Furthermore, the waterproof protection cover 28, the airtight antifogging layer 27, the feeder installation member 22 (display device 41), the air layer 40, and the circular plate portion 21 b of the base 21 (bottom portion of the case 42) are disposed in a layered manner. This makes it possible to provide, in the information display unit 17, an internal space which has a large contact area with the display device 41 and is large in capacity. The heat generated by the display device 41 is therefore efficiently radiated to the air layer 40.

In addition to the above, because no air layer is provided between the display surface 18a of the multifunction mobile terminal 18 (display device 41) and the waterproof protection cover 28, the distance between the display surface 18a of the multifunction mobile terminal 18 (display device 41) and the outer surface of the waterproof protection cover 28 does not increase even if the capacity of the internal space of the information display unit 17 is increased. This makes it possible to increase the capacity of the internal space of the information display unit 17 without increasing the blind area on the display surface 18a of the multifunction mobile terminal 18 (display device 41).

In addition to the above, on account of high heat radiation, the degree of freedom in the heat radiation structure of the information display unit 17 can be increased and the capacity of the information display unit 17 can be decreased. The degree of freedom in the mounting position of the information display unit 17 on the motorcycle 1 is therefore improved.

In addition to the above, the base 21 (case 42) has the communication paths 21c each of which is thicker than the airtight antifogging layer 27 and which connect, to the outside, the air layer 40 which is provided as a layer between the feeder installation member 22 (display device 41) and the circular plate portion 21 b of the base 21. This makes it possible to efficiently dissipate, through the communication paths 21 c, the heat of the warm air from the air layer 40 from which the heat generated from the display device 41 is efficiently radiated. The heat radiation of the information display unit 17 is therefore improved. On this account, the degree of freedom in the heat radiation structure of the information display unit 17 is increased and the capacity of the information display unit 17 can be reduced. The degree of freedom in the mounting position of the information display unit 17 on the motorcycle 1 is therefore improved.

In addition to the above, the base 21 (case 42) has plural communication paths 21c. This arrangement facilitates the air circulation between the air layer 40 from which the heat generated from the display device 41 is efficiently radiated and the outside. As a result, it is possible to further evenly radiate the heat inside the information display unit 17.

Furthermore, in the present embodiment, the information display unit 17 is provided on the handle unit 5. This makes it possible to shorten the length of the motorcycle in the forward/rearward direction, as compared to a case where the information display unit 17 is provided forward of the handle unit. Furthermore, it is possible to provide the information display unit 17 at a position close to the center of gravity of the vehicle.

In addition to the above, in the present embodiment, the distance between the front end part and the rear end part of the screen 17a of the information display unit 17 in the vehicle up/down direction is equal to or shorter than the distance between the front end part and the rear end part of the screen 17a in the forward/rearward direction. For this reason, it is possible to provide the screen 17a of the information display unit 17 disposed rearward of the handle unit, at an angle orthogonal to or nearly orthogonal to the line of sight of the rider.

### <Second Embodiment>

Now, the following will describe the second embodiment of the present teaching with reference to figures.

The present embodiment is an example in which an information display unit for a saddle type vehicle of the present teaching is mounted on a motorcycle 101. Components having the same structure as those in the first embodiment will be given the same reference numerals, and the description thereof will be omitted, if appropriate. The definitions of the forward/rearward direction and the left-right direction are identical with those of the first embodiment.

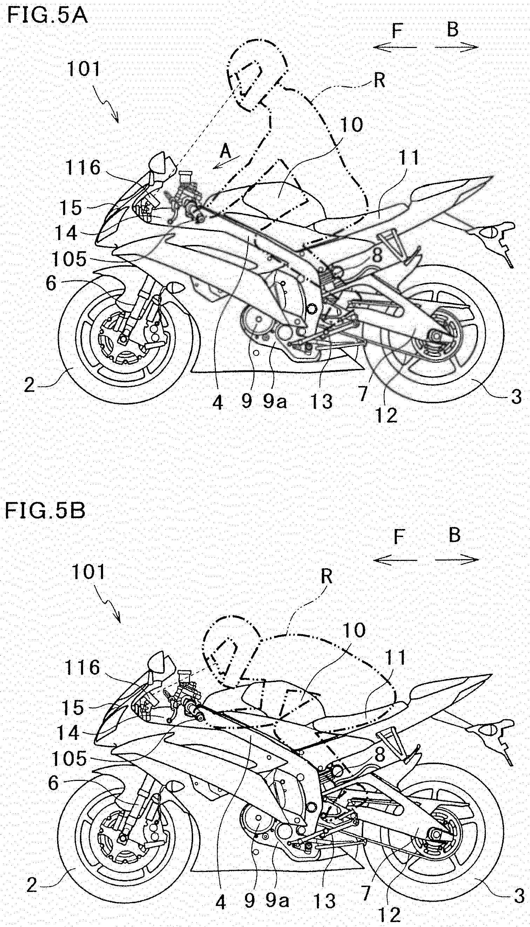

While in the first embodiment the information display unit 116 is provided on the handle crown 5a (handle unit 5), in the present embodiment no information display unit is provided on a handle crown 105a (handle unit 105). As shown in FIG. 5A and FIG. 5B, in the present embodiment an information display unit (for a saddle type vehicle) 116 is provided at an upper part the headlight unit 14 in place of the meter unit 16.

As shown in FIG. 6, the information display unit 116 is formed to be a substantially trapezoidal plate. The information display unit 116 includes a screen 116a configured to display information such as vehicle speed and engine rotation speed. The screen 116a of the information display unit 116 is inclined rearward and upward with respect to the forward/rearward direction and the up/down direction. In other words, the rear end part of the screen 116a is positioned downward of the front end part of the screen 116a. In the present embodiment, the distance between the front end part and the rear end part of the screen 116a in the up/down direction is equal to or longer than the distance between the front end part and the rear end part of the screen 116a in the forward/rearward direction. The inclination angle of the screen 116a is preferably orthogonal to or nearly orthogonal to the line of sight of the rider R sitting on the seat 11. It is noted that the distance between the front end part and the rear end part of the screen 116a in the up/down direction may be shorter than the distance between the front end part and the rear end part of the screen 116a in the forward/rearward direction.

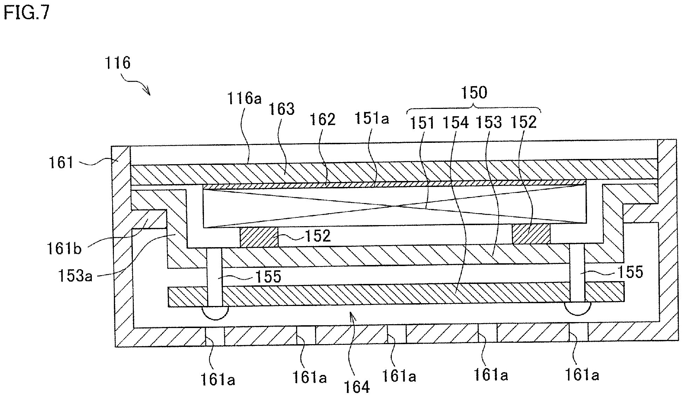

As shown in FIG. 7, the information display unit 116 includes a display device 150, a case 161, an airtight antifogging layer 162, and a waterproof protection cover 163. As described above, while the information display unit 116 is disposed to be inclined with respect to the up/down direction, the following description of the information display unit 116 assumes that the thickness direction of the information display unit 116 is the up/down direction, the screen 116a side (top surface side) of the information display unit 116 is the upper side, and the bottom surface side is the lower side.

The case 161 is formed to be an open-top box. At a bottom part of the case 161, plural communication paths 161 a are formed. Furthermore, on the inner surface of a side wall of the case 161, a protrusion 161 b is provided.

The display device 150 is provided in the case 161 and supported by the protrusion 161 b of the case 161. The display device 150 includes a display main body 151, plural supporting members 152, a supporting plate 153, and a circuit board 154.

The supporting plate 153 is supported by the protrusion 161b at its end portion. At a central part of the supporting plate 153, a housing portion 153a which is concave downward is formed. In this housing portion 153a, the display main body 151 is provided. On the inner bottom surface of the housing portion 153a, the supporting members 152 are provided. The supporting plate 153 supports the display main body 151 by means of the supporting members 152. The supporting member 152 is preferably elastic but may not be elastic.

The display main body 151 is constituted by a display such as a liquid crystal display, an organic EL display, and a plasma display. The display may be a segment display or a dot matrix display. When the display is a liquid crystal display, the display may be a full transmissive type using solely a backlight as a light source or a semi transmissive type (semi reflective type) using reflection of sunlight and a backlight as light sources. The almost entirety of the upper surface of the display main body 151 constitutes a display surface 151a on which information is displayed. The display surface 151 a is, for example, made of glass or synthetic resin.

The circuit board 154 is provided downward of the supporting plate 153. The circuit board 154 is fixed to the supporting plate 153 by a screw 155. The circuit board 154 is provided for driving the display main body 151, and plural types of electronic components are mounted thereon. The circuit board 154 is connected with the display main body 151 by a wire (not illustrated). This wire passes through a through hole (not illustrated) made through the supporting plate 153.

Between the case 161 and the display device 150, an air layer 164 is formed. The minimum thickness of the air layer 164 is longer than the thickness of a later-described airtight antifogging layer 162. The air layer 164 is connected to the outside via communication paths 161 a made through the bottom part of the case 161. The communication paths 161 a are formed to oppose the lower surface of the circuit board 154.

The waterproof protection cover 163 is provided upward of the display main body 151 (i.e., on the display surface 151a side). In the space (housing space) formed by the waterproof protection cover 163 and the case, the display device 150 is housed. The waterproof protection cover 163 is attached to the inner surface of a side wall of the case 161 in such a way as to prevent water from entering the case 161 from between the waterproof protection cover 163 and the case 161. The waterproof protection cover 163 is formed to be a flat plate. The waterproof protection cover 163 is made of a material which is light transmissive and impervious to water. The waterproof protection cover 163 is transparent and made of, for example, glass or synthetic resin.

The airtight antifogging layer 162 is provided between the display surface 151a of the display main body 151 and the lower surface of the waterproof protection cover 163. The airtight antifogging layer 162 contacts with the display surface 151a of the display main body 151 and the lower surface of the waterproof protection cover 163. With this, the display surface 151 a of the display main body 151 and the waterproof protection cover 163 are arranged to be airtight therebetween. The airtight antifogging layer 162 may be attached to the waterproof protection cover 163 or may closely contact with the waterproof protection cover 163. The airtight antifogging layer 162 may be adhered to the display surface 151 a of the display main body 151 or may closely contact with the display surface 151 a without being adhered.

The airtight antifogging layer 162 covers the entirety of the display surface 151a of the display main body 151. The airtight antifogging layer 162 is substantially uniform in thickness and thinner than the waterproof protection cover 163. The airtight antifogging layer 162 is made of a light-transmissive material. The airtight antifogging layer 162 is transparent and made of, for example, synthetic resin.

On the outer surface (upper surface) of the waterproof protection cover 153, a touch panel (not illustrated) having a touch sensor may be provided. This touch sensor may be arranged to be operable in such a way that the sensor is electrically connected with an electric component in the information display unit 116 and operated by pressing the surface of the touch panel by a finger or slipping a finger on the surface of the touch panel.

The waterproof protection cover 163, the airtight antifogging layer 162, the display device 150, a part of the air layer 164, and the bottom part of the case 161 are lined up in the up/down direction (i.e., they are disposed in a layered manner).

The display main body 151 is replaceable. When the waterproof protection cover 163 and the airtight antifogging layer 162 are fixed to the display main body 151, the waterproof protection cover 163 and the airtight antifogging layer 162 may be replaced together with the display main body 151. Meanwhile, when the airtight antifogging layer 162 is fixed to the display main body 151, the airtight antifogging layer 162 may be replaced together with the display main body 151.

The information display unit 116 of the present embodiment is provided with an airtight antifogging layer 162 which causes the inner surface of the waterproof protection cover 163 and the display surface 151a of the display main body 151 to be airtight therebetween by contacting with the lower surface (inner surface) of the waterproof protection cover 163 and the display surface 151 a of the display main body 151. For this reason, warm air which causes condensation does not exist between the inner surface of the waterproof protection cover 163 and the display surface 151a of the display main body 151. As a result, even if the waterproof protection cover 163 is exposed to the weather, the occurrence of condensation at the inner surface of the waterproof protection cover 163 is prevented, and hence the fogging of the waterproof protection cover 163 is prevented.

In addition to the above, the airtight antifogging layer 162 is always in contact with the lower surface (inner surface) of the waterproof protection cover 163 and the display surface 151a of the display main body 151. For this reason, even if the vehicle vibrates during the running, the airtight antifogging layer 162 is not damaged and the antifogging capability is not lowered as in the cases of the known antifogging film. The information display unit 116 therefore has high shock resistance.

Furthermore, by the waterproof protection cover 163, the display main body 151 is protected from weather, high-pressure water from a high-pressure washer, and the collision with an obstacle. Because the strength of the airtight antifogging layer 162 is not required to be high, it is possible to arrange the airtight antifogging layer 162 to be thinner than the waterproof protection cover 163. Because the airtight antifogging layer 162 is thin, the distance between the outer surface of the waterproof protection cover 163 and the display surface 151 a of the display main body 151 is shortened.

As shown in FIG. 5A and FIG. 5B, when the rider R changes the riding posture, the angle at which the rider R views the information display unit 116 also changes. When the distance between the outer surface of the waterproof protection cover 163 and the display surface 151 a of the display main body 151 is long, a blind area may be formed on the display surface 151 a of the display main body 151 when the information display unit 116 is viewed by the rider at a certain angle. In this regard, in the present embodiment, as described above, because the distance between the outer surface of the waterproof protection cover 163 and the display surface 151a of the display main body 151 is short, the blind area on the display surface 151a of the display main body 151 for the rider R is small even if the angle at which the rider R views the information display unit 116 changes.

Furthermore, because the information display unit 116 of the present embodiment is provided with the airtight antifogging layer 162, the occurrence of fogging is prevented irrespective of the temperature of the air in the information display unit 116. It is therefore unnecessary to provide an internal space of the information display unit 116 for the purpose of restraining the internal temperature to a temperature at which the fogging is prevented. The capacity of the internal space of the information display unit 116 is determined in consideration of the heat resistance of the internal components. The heat resistance of the internal components is higher than the internal temperature at which the fogging (condensation) occurs. It is therefore possible to reduce the capacity of the internal space of the information display unit 116 as compared to the case where the air exists between the waterproof protection cover 163 and the display surface 151 a of the display main body 151. Because the capacity of the information display unit 116 is reduced, the degree of freedom in the mounting position of the information display unit 116 with respect to the motorcycle 101 is improved.

Furthermore, in the known information display unit in which the condensation water is generated between the waterproof protection cover 163 and the display surface 151 a of the display main body 151, the mounting angle of the information display unit 116 with respect to the motorcycle 101 is preferably set at an angle at which the condensation water does not easily flow. In this regard, because the airtight antifogging layer 162 is provided in the present embodiment, condensation water is not generated between the waterproof protection cover 163 and the display surface 151 a of the display main body 151, and hence the degree of freedom in the mounting angle of the information display unit 116 with respect to the motorcycle 101 is improved.

In addition to the above, in the present embodiment, the air layer 164 which is thicker than the airtight antifogging layer 162 is provided between the display device 150 and the case 161. Furthermore, the waterproof protection cover 163, the airtight antifogging layer 162, the display device 150, a part of the air layer 164, and the bottom part of the case 161 are disposed in a layered manner. This makes it possible to provide, in the information display unit 116, an internal space which has a large contact area with the display device 150 and is large in the capacity. The heat generated by the display device 150 is therefore efficiently radiated to the air layer 164.

In addition to the above, because no air layer is provided between the display surface 151a of the display device 150 and the inner surface of the waterproof protection cover 163, the distance between the display surface 151 a of the display device 150 and the outer surface of the waterproof protection cover 163 does not become long even if the capacity of the internal space of the information display unit 116 is increased. On this account, the capacity of the internal space of the information display unit 116 is increased without increasing the size of the blind area on the display surface 151 a of the display device 150.

Furthermore, because of the high heat radiation, the degree of freedom in the radiation structure of the information display unit 116 is improved and the capacity of the information display unit 116 can be reduced. This improves the degree of freedom in the mounting position of the information display unit 116 with respect to the motorcycle 101.

In addition to the above, the case 161 has the communication paths 161a which connect, to the outside, a part of the air layer 164 which is thicker than the airtight antifogging layer 162 and is provided as a layer between the display device 150 and the case 161. This makes it possible to efficiently dissipate the warm air to the outside through the communication paths 161 a, from the air layer 164 to which the heat generated by the display device 150 is efficiently radiated. With this, the heat radiation of the information display unit 116 is improved. The degree of freedom in the radiation structure of the information display unit 116 is improved and the capacity of the information display unit 116 can be reduced. The degree of freedom in the mounting position of the information display unit 116 with respect to the motorcycle 101 is therefore improved.

In addition to the above, the case 161 includes plural communication paths 161a. This arrangement facilitates the air circulation between a part of the air layer 164 from which the heat generated from the display device 150 is efficiently radiated and the outside. As a result, it is possible to further evenly radiate the heat inside the information display unit 116.

In addition to the above, in the present embodiment the information display unit 116 is provided forward of the handle unit 105. For this reason, the line of sight of the rider tends to be inclined with respect to the screen 116a of the information display unit 116 as compared to cases where the information display unit is provided on the handle unit or rearward of the handle unit. In this regard, as described above, because in the present embodiment the degree of freedom in the mounting angle of the information display unit 116 with respect to the motorcycle 101 is high, it is possible to provide the screen 116a of the information display unit 116 at an angle orthogonal to or nearly orthogonal to the line of sight of the rider. This improves the visibility of the screen of the information display unit 116 for the rider, and the blind area is reduced.

In addition to the above, in the present embodiment the distance between the front end part and the rear end part in the up/down direction of the screen 116a of the information display unit 116 is equal to or longer than the distance between the front end part and the rear end part in the forward/rearward direction of the screen 116a. This allows the screen 116a of the information display unit 116 provided forward of the handle unit 105 to be at an angle orthogonal to or nearly orthogonal to the line of light of the rider.

The preferred embodiments of the present teaching have been described as above. The present teaching, however, is not limited to the first and second embodiments above and may be variously altered within the scope of the claims. Furthermore, below-described variations can be suitably combined with one another and implemented. It is noted that the term "preferable" is non-exclusive in the present specification and indicates "preferable but not limited to".

While in the first and the second embodiments the airtight antifogging layer 27, 162 covers the entirety of the display surface 18a, 151 a of the display device 41, 150, the airtight antifogging layer may cover only a part of the display surface of the display device. For example, plural parts of the display surface of the display device may be covered with plural airtight antifogging layers. Alternatively, for example, the display surface of the display device may be covered with an annular airtight antifogging layer, except at a central part of the display surface.

When the airtight antifogging layer covers only a part of the display surface of the display device, the fogging of the waterproof protection cover may be prevented by a known method at a part between the display surface of the display device and the waterproof protection cover where no airtight antifogging layer is provided. For example, the fogging may be prevented by arranging the internal space of the information display unit to have a large capacity and restraining the temperature increase in the internal space. Alternatively, an antifogging film which does not contact with the display surface of the display device may be provided on the inner surface of the waterproof protection cover to prevent the occurrence of fogging.

While in the first and second embodiments the airtight antifogging layer 27, 162 is substantially uniform in thickness, the airtight antifogging layer may not be uniform in thickness as long as this layer contacts with the inner surface of the waterproof protection cover and the display surface of the display device. To put it differently, the size of the gap between the inner surface of the waterproof protection cover and the display surface of the display device may not be uniform.

While in the first and second embodiments the waterproof protection cover 28, 163 is a flat plate in shape, the waterproof protection cover may be differently shaped. For example, the inner surface or the outer surface of the waterproof protection cover may be curved. Alternatively, for example, the inner surface or the outer surface of the waterproof protection cover may be uneven.

While in the first and second embodiments the display surface 18a, 151 a of the display device 41, 150 is flat, the display surface of the display device may be differently shaped. For example, the display surface of the display device may be curved. Alternatively, for example, the display surface of the display device may be uneven.

The arrangement of the display device of the present teaching is not limited to those of the display devices 41 and 150 of the first and second embodiments.

While in the first and second embodiments the case 42, 161 forming the housing space of housing the display device 41, 150 with the waterproof protection cover 28, 163 is independent from the vehicle main body, the case may be differently arranged. A part of the case (e.g., the bottom part) may be constituted by a part of a component (e.g., an outer cover) of the vehicle main body.

While in the first and second embodiments each of the case communication paths 21c, 161 a is constituted by a through hole formed through a single member, the communication paths of the present teaching may be differently arranged. Each of the communication paths may be a gap formed between plural members that are combined with one another. For example, a circular communication path may be formed by combining two members each having a semicircular notch. In addition to the above, the communication paths may not linearly extend. For example, the communication paths may have a labyrinth structure.

While in the first and second embodiments the waterproof protection cover 28, 163, the airtight antifogging layer 27, 162, the display device 41, 150, at least part of the air layer 40, 164, and the bottom part of the case 42, 161 are disposed in a layered manner, the waterproof protection cover, the airtight antifogging layer, the display device, at least part of the air layer, and the bottom part of the case may not be disposed in the layered manner on condition that an air layer is formed between the case and the display device. For example, the display device is provided on the bottom part of the case without any gaps, and the air layer is formed between a side wall of the case and the display device. In this case, a communication path may be formed through the side wall of the case to connect the air layer to the outside.

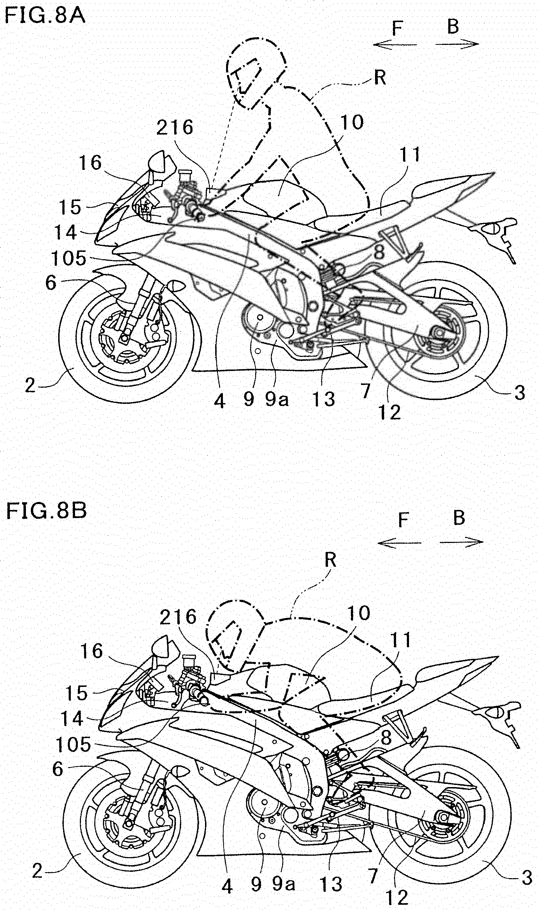

The information display unit may be provided rearward of the handle unit. For example, as shown in FIG. 8, an information display unit 216 may be provided on an upper part of a fuel tank 10 which is provided rearward of the handle unit 105. When the information display unit is provided rearward of the handle unit, the distance between the front end part and the rear end part in the up/down direction of the screen of the information display unit is preferably equal to or shorter than the distance between the front end part and the rear end part in the vehicle forward/rearward direction of the screen. This is because the screen of the information display unit can be disposed at an angle orthogonal to or nearly orthogonal to the line of sight of the rider.

While in the first and second embodiments the handle unit 5, 105 is of a clip-on handle type, the handle unit of the present teaching may be of a one-piece handlebar type. The separate handle is a handle arranged such that handlebars are connected to front forks without the intermediary of a handle crown. The one-piece handlebar is a handle arranged such that a handlebar is directly connected to a handle crown.

While in the embodiments above the power source of the vehicle is the engine 9, the power source may not be an engine. For example, the power source may be an electric motor.

While the motorcycles 1 and 101 of the first and second embodiments are on-road motorcycles in the narrow sense, the saddle type vehicle of the present teaching is not limited to such motorcycles in the narrow sense. The saddle type vehicle encompasses all kinds of vehicles on which an occupant rides. Examples of the saddle type vehicle of the present teaching include a motorcycle (in the broad sense), a tricycle, an ATV (All Terrain Vehicle), a personal water craft, and a snowmobile. The motor cycle in the broad sense encompasses scooters in addition to the motorcycles in the narrow sense.

## Claims

1. An information display unit (17) for a saddle type vehicle (1), the information display unit (17) configured to display information and comprising:
a display device (41) which includes a display surface (18a) on which the information is displayed;
a waterproof protection cover (28) which is light transmissive and impervious to water;
a case (42) which forms, with the waterproof protection cover (28), a housing space in which the display device (41) is housed; and the information display unit being **characterized in that**
an airtight antifogging layer (27) contacts with an inner surface of the waterproof protection cover (28) and the display surface (18a) of the display device (41) so as to secure the airtightness between the inner surface and the display surface (18a) and prevent fogging, is thinner than the waterproof protection cover, and is light transmissive.

2. The information display unit (17) according to claim 1, wherein
an air layer (40) which is thicker than the airtight antifogging layer (27) is formed between the display device (41) and the case (42), and
the waterproof protection cover (28), the airtight antifogging layer (27), the display device (41), at least part of the air layer (40), and a bottom part of the case (42) are disposed in a layered manner.

3. The information display unit (17) according to claim 2, wherein the case (42) includes a communication path (21c) which is thicker than the airtight antifogging layer (27) and connects, to the outside, the at least part of the air layer (40) which is disposed between the display device (41) and the bottom part of the case (42) in the layered manner.

4. The information display unit according to claim 3, wherein the case (42) includes plural communication paths (21 c) which are thicker than the airtight antifogging layer (27) and connect, to the outside, the at least part of the air layer (40) which is disposed between the display device (41) and the bottom part of the case (42) in the layered manner.

5. A saddle type vehicle (1) comprising:
a vehicle body frame (4);
a power source (9) mounted on the vehicle body frame (4);
a seat (11) provided upward of the power source (9);
a handle unit (5) which is provided forward of the seat (11) and upward of the power source (9); and
the information display unit (17) according to any one of claims 1 to 4, which is provided forward of the seat (11) and upward of the power source (9) and includes a screen (17a) having a front end part and a rear end part which is downward of the front end part.

6. The saddle type vehicle (1) according to claim 5, wherein the information display unit (17) is provided forward of the handle unit (5) in a vehicle forward/rearward direction.

7. The saddle type vehicle (1) according to claim 6, wherein the distance between the front end part and the rear end part in a vehicle up/down direction of the screen (17a) of the information display unit (17) is equal to or longer than the distance between the front end part and the rear end part in the vehicle forward/rearward direction of the screen (17a).

8. The saddle type vehicle (1) according to claim 5, wherein the information display unit (17) is provided on the handle unit (5).

9. The saddle type vehicle (1) according to claim 5, wherein the information display unit (17) is provided rearward of the handle unit (5) in the vehicle forward/rearward direction.

10. The saddle type vehicle (1) according to claim 8 or 9, wherein,
the distance between the front end part and the rear end part in a vehicle up/down direction of the screen (17a) of the information display unit (17) is equal to or shorter than the distance between the front end part and the rear end part in the vehicle forward/rearward direction of the screen (17a).

## Patentansprüche

1. Informationsanzeige-Einheit (17) für ein Spreizsitz-Fahrzeug (1), wobei die Informationsanzeige-Einheit (17) so eingerichtet ist, dass sie Informationen anzeigt, und sie umfasst:
eine Anzeigeeinrichtung (41), die eine Anzeigefläche (18a) enthält, auf der die Informationen angezeigt werden;
eine wasserdichte Schutzabdeckung (28), die lichtdurchlässig und wasserundurchlässig ist;
ein Gehäuse (42), das mit der wasserdichten Schutzabdeckung (28) einen Aufnahmeraum bildet, indem die Anzeigeeinrichtung (41) aufgenommen ist;
und wobei die Informationsanzeige-Einheit **dadurch gekennzeichnet ist, dass**
eine luftdichte beschlaghemmende Schicht (27), die mit einer Innenfläche der wasserdichten Schutzabdeckung (28) und der Anzeigefläche (18a) der Anzeigeeinrichtung (41) so in Kontakt ist, dass die Luftdichtigkeit zwischen der Innenfläche und der Anzeigefläche (18a) gewährleistet ist und beschlagen verhindert wird, dünner ist als die wasserdichte Schutzabdeckung und lichtdurchlässig ist.

2. Informationsanzeige-Einheit (17) nach Anspruch 1, wobei
eine Luftschicht (40), die dicker ist als die luftdichte beschlaghemmende Schicht (27) zwischen der Anzeigeeinrichtung (41) und dem Gehäuse (42) ausgebildet ist, und
die wasserdichte Schutzabdeckung (28), die luftdichte beschlaghemmende Schicht (27), die Anzeigeeinrichtung (41), wenigstens ein Teil der Luftschicht (40) sowie ein unterer Teil des Gehäuses (42) geschichtet angeordnet sind.

3. Informationsanzeige-Einheit (17) nach Anspruch 2, wobei das Gehäuse (42) einen Verbindungsweg (21 c) enthält, der dicker ist als die luftdichte beschlaghemmende Schicht (27) und wenigstens den Teil der Luftschicht (40) der sich in der geschichteten Anordnung zwischen der Anzeigeeinrichtung (41) und dem unteren Teil des Gehäuses (42) befindet, mit der Außenseite verbindet.

4. Informationsanzeige-Einheit nach Anspruch 3, wobei das Gehäuse (42) mehrere Verbindungswege (21 c) enthält, die dicker sind als die luftdichte beschlaghemmende Schicht (27) und wenigstens den Teil der Luftschicht (40), der sich in der geschichteten Anordnung zwischen der Anzeigeeinrichtung (41) und dem unteren Teil des Gehäuses (42) befindet, mit der Außenseite verbinden.

5. Spreizsitz-Fahrzeug (1), das umfasst:
einen Fahrzeug-Karosserierahmen (4);
eine Kraftquelle (9), die an dem Fahrzeug-Karosserierahmen (4) installiert ist;
einen Sitz (11), der sich oberhalb der Kraftquelle (9) befindet;
eine Griff-Einheit (5), die sich vor dem Sitz (11) und oberhalb der Kraftquelle (9) befindet; sowie
die Informationsanzeige-Einheit (17) nach einem der Ansprüche 1 bis 4, die sich vor dem Sitz (11) und oberhalb der Kraftquelle (9) befindet und einen Bildschirm (17a) enthält, der einen vorderen Endteil sowie einen hinteren Endteil aufweist, der sich unter dem vorderen Endteil befindet.

6. Spreizsitz-Fahrzeug (1) nach Anspruch 5, wobei sich die Informationsanzeige-Einheit (17) in einer Längsrichtung des Fahrzeugs vor der Griff-Einheit (5) befindet.

7. Spreizsitz-Fahrzeug (1) nach Anspruch 6, wobei der Abstand zwischen dem vorderen Endteil und dem hinteren Endteil des Bildschirms (17a) der Informationsanzeige-Einheit (17) in einer vertikalen Richtung des Fahrzeugs genauso lang ist wie oder länger als der Abstand zwischen dem vorderen Endteil und dem hinteren Endteil des Bildschirms (17a) in der Längsrichtung des Fahrzeugs.

8. Spreizsitz-Fahrzeug (1) nach Anspruch 5, wobei sich die Informationsanzeige-Einheit (17) an der Griff-Einheit (5) befindet.

9. Spreizsitz-Fahrzeug (1) nach Anspruch 5, wobei sich die Informationsanzeige-Einheit (17) in der Längsrichtung des Fahrzeugs hinter der Griff-Einheit (5) befindet.

10. Spreizsitz-Fahrzeug (1) nach Anspruch 8 oder 9, wobei
der Abstand zwischen dem vorderen Endteil und dem hinteren Endteil des Bildschirms (17a) der Informationsanzeige-Einheit (17) in einer vertikalen Richtung des Fahrzeugs genauso groß ist wie oder kürzer als der Abstand zwischen dem vorderen Endteil und dem hinteren Endteil des Bildschirms (17a) in der Längsrichtung des Fahrzeugs.

## Revendications

1. Unité d'affichage d'information (17) pour un véhicule à selle (1), l'unité d'affichage d'information (17) étant configurée pour afficher de l'information et comprenant :
un dispositif d'affichage (41) qui comporte une surface d'affichage (18a) sur laquelle l'information est affichée ;
un couvercle de protection imperméable (28) qui transmet la lumière et est étanche à l'eau ;
un boîtier (42) qui forme, avec le couvercle de protection imperméable (28), un espace de logement dans lequel est logé le dispositif d'affichage (41) ;
l'unité d'affichage d'information étant **caractérisée en ce qu'**une couche anti-buée étanche à l'air (27) est en contact avec une surface interne du couvercle de protection imperméable (28) et la surface d'affichage (18a) du dispositif d'affichage (41) de manière à assurer l'étanchéité à l'air entre la surface interne et la surface d'affichage (18a) et à éviter la formation de buée, est plus mince que le couvercle de protection imperméable, et transmet la lumière.

2. Unité d'affichage d'information (17) selon la revendication 1, dans laquelle
une couche d'air (40) qui est plus épaisse que la couche anti-buée étanche à l'air (27) est formée entre le dispositif d'affichage (41) et le boîtier (42), et
le couvercle de protection imperméable (28), la couche anti-buée étanche à l'air (27), le dispositif d'affichage (41), au moins une partie de la couche d'air (40) et une partie de fond du boîtier (42) sont agencés sous forme de couches superposées.

3. Unité d'affichage d'information (17) selon la revendication 2, dans laquelle le boîtier (42) comporte un chemin de communication (21c) qui est plus épais que la couche anti-buée étanche à l'air (27), et met en connexion avec l'extérieur ladite au moins une partie de la couche d'air (40) qui est disposée entre le dispositif d'affichage (41) et la partie de fond du boîtier (42) sous forme de couches superposées.

4. Unité d'affichage d'information selon la revendication 3, dans laquelle le boîtier (42) comporte une pluralité de chemins de communication (21c) qui sont plus épais que la couche anti-buée étanche à l'air (27), et mettent en connexion avec l'extérieur ladite au moins une partie de la couche d'air (40) qui est agencée entre le dispositif d'affichage (41) et la partie de fond du boîtier (42) sous forme de couches superposées.

5. Véhicule à selle (1) comprenant :
un châssis de corps de véhicule (4) ;
une source d'alimentation (9) montée sur le châssis de corps de véhicule (4) ;
un siège (11) pourvu plus haut que de la source d'alimentation (9) ;
une unité de guidon (5) pourvue en avant du siège (11) et plus haut que la source d'alimentation (9) ; et
l'unité d'affichage d'information (17) selon l'une quelconque des revendications 1 à 4, qui est pourvue en avant du siège (11) et plus haut que la source d'alimentation (9) et comporte un écran (17a) ayant une partie d'extrémité avant et une partie d'extrémité arrière qui se trouve plus bas que la partie d'extrémité avant.

6. Véhicule à selle (1) selon la revendication 5, dans lequel l'unité d'affichage d'information (17) est pourvue en avant de l'unité de guidon (5) en direction avant-arrière du véhicule.

7. Véhicule à selle (1) selon la revendication 6, dans lequel la distance en direction haut-bas du véhicule entre la partie d'extrémité avant et la partie d'extrémité arrière de l'écran (17a) de l'unité d'affichage d'information (17) est supérieure ou égale à la distance en direction avant-arrière du véhicule entre la partie d'extrémité avant et la partie d'extrémité arrière de l'écran (17a).

8. Véhicule à selle (1) selon la revendication 5, dans lequel l'unité d'affichage d'information (17) est pourvue sur l'unité de guidon (5).

9. Véhicule à selle (1) selon la revendication 5, dans lequel l'unité d'affichage d'information (17) est pourvue en arrière de l'unité de guidon (5) en direction avant-arrière du véhicule.

10. Véhicule à selle (1) selon la revendication 8 ou 9, dans lequel la distance en direction haut-bas du véhicule entre la partie d'extrémité avant et la partie d'extrémité arrière de l'écran (17a) de l'unité d'affichage d'information (17) est inférieure ou égale à la distance en direction avant-arrière du véhicule entre la partie d'extrémité avant et la partie d'extrémité arrière de l'écran (17a).
